# EUROPEAN PATENT APPLICATION

(11) **EP 4 473 848 A1**
(43) Date of publication of application: **11.12.2024**
(21) Application number: 23382542.1
(22) Date of filing: 06.06.2023
(51) Int. Cl.: A23N 5/00, A47J 43/26

(54) **DEVICE AND PROCEDURE FOR OPENING PISTACHIOS**

(71) Applicant: Fundacion Azti/Azti Fundazioa, 48395 Sukarrieta (Bizkaia) (ES)
(72) Inventor: PÉREZ SIMÓN, Izaskun, Vitoria-Gasteiz (Araba) (ES); LÓPEZ CONDE, Virginia, Vitoria-Gasteiz (Araba) (ES); PUÉRTOLAS GRACIA, Eduardo, Derio (Bizkaia) (ES); MURGUI RETA, Xabier Fernando, Bilbao (Bizkaia) (ES)
(74) Representative: Pons

(57) **Abstract**

The invention describes a device for opening pistachios and associated procedure, wherein the device comprises a conical receptacle (5), intended to receive a pistachio at the tip (2), a rod (11), aligned with the axis of the conical receptacle (5), and an activator, intended to move the rod (11), which comprises a first frustoconical receptacle (6) with the smaller diameter of a dimension between 5% and 20% less than the largest transverse diameter of the pistachio.

## Description

### OBJECT OF THE INVENTION

The present invention relates to a device and an associated procedure for opening pistachios by creating a slit in closed pistachios from the tip and along the suture of the shell, the kernel or seed remaining inside the shell, resulting in a natural opening appearance and sufficient slit dimensions for a user to insert their fingernails and open the pistachios without having to use any tools.

### BACKGROUND OF THE INVENTION

The pistachio fruit has a seed encased in a hard shell. The shell consists of two halves joined together by a suture line, or peduncular scar, which runs from the base to the tip and is generated during the growth of the fruits on the tree. When the fruits are ripe and have reached sufficient seed size, the two halves of the shell separate, creating a slit at the tip along the suture towards the centre of the pistachio. In this slit one can insert their nails to open the nut without having to use a nutcracker. Open pistachios with a suitable slit have a higher commercial value and are used in the appetiser or snack sector. The pistachios that are closed at the time of harvesting, or do not have a large enough slit, are shelled to separate the seed from the shell, the seed being used in the ingredient industry, or they are sold closed at a lower price than open ones or ones that are already shelled.

Depending on the type of crop, either rainfed or irrigated, and on the variety or the weather, a high proportion of harvested pistachios are closed during harvest. For certain pistachio varieties, such as the Kerman variety, which is a variety of great commercial value due to its quality and large size, the percentage of closed fruits on the tree that have not opened naturally can be high, depending on the season, and can be in the range of 20% to 70% of production. A percentage of these pistachios are empty or have a very small seed, so it is not worth opening them, but a significant percentage of the closed pistachios have the correct density, and therefore a sufficient seed size, making them worth opening for use in the snack sector, where seeds inside the shell are more valuable than outside.

There is a need in the sector for efficient and automated techniques for opening closed pistachios in a way that resembles the naturally open ones. It is therefore important for the opening technique to provide a high percentage of pistachios that are open at the tip, with the minimum percentage of pistachios having a broken shell, or a shell that is cracked in areas other than the suture, in addition to pistachio seeds that are outside their shell, and for the slit at the tip and the rest of the suture to be large enough for one to be able to insert their fingernail. Furthermore, the technique must allow for potentially high processing capacities.

Devices aimed at breaking the shell and separating the seed are common, but attempts made to design devices aimed at automating the opening of pistachios have not been successful, given that they continue to lead to a large number of fruits that never open, as well as broken shells, seeds that are separated from their shells, or even openings that are too small to insert a fingernail in pistachios even when the opening is produced along the suture.

In any case, numerous devices for creating an opening line in pistachios, separating the two shells, without completely separating them, in such a way that the seed remains inside with the two parts of the shell joined are known in the state of the art. These devices are configured as a compression system with two aligned elements, wherein one of them is activated with an alternative movement to move closer to and further away from the other, such that by placing the pistachio between them, they generate an impact to open it. Several different ways of proceeding with this opening are described below, based on the results of various tests and experiments carried out by the authors of the present invention.

A first way of opening pistachios is by the axial or longitudinal compression of the elements on the pistachio, the elements compressing the pistachio at the tip and at the base.

The result obtained is a low opening efficiency of the pistachio tip, a high percentage of broken shells and improper openings, such as small slits at the base and in the middle or basal area of the suture, without reaching the tip, or seeds that are out of their shells. These problems are common.

One drawback of this way of opening a pistachio is that the same must be oriented along the longitudinal axis thereof parallel to the axis of the compression system.

There is a possibility that the shell can be moistened reaching a moisture of 30-40%, instead of 7% of the stored dry product.

In this case, the result is a low opening efficiency of the tip, a high percentage of inappropriate openings, such as small cracks at the base and in the middle or basal area of the tip, without actually opening the tip.

The conclusion is that compressing a pistachio at the tips prevents the opening thereof at the tip, for both dry, hard shells and shells softened by moistening.

Thus, it is known in the sector that the opening of pistachios by means of longitudinal compression in the area of the tips is not efficient.

A second way to open pistachios is by lateral compression, leaving the tip and base of the pistachio free.

In this case, the compression is exerted on surfaces parallel to the longitudinal axis of the pistachio. The points of contact with the pistachio suture are situated opposite each other in the area of greatest diameter of the pistachio. Both the tip and the base or peduncular scar remain free from contact with compression surfaces.

The result is low tip-opening efficiency and a high percentage of broken shells and seeds out of their shells.

When dry, the tip-opening efficiency is very low. The shell breaks by force in the area of contact, or so much force has to be applied that when the tip is opened, the entire suture opens and the seed is separated from the shell, or the base area of the shell breaks before the tip breaks. In short, it is a less controllable force, and therefore there are fewer possibilities for automation.

If the shell is moistened to a level of 30-40%, the result is very high opening efficiency. In this case, the shell becomes more flexible and the binding force of the suture is weakened, such that the shell barely breaks in any area other than the suture and the bending that occurs in the suture is transmitted to the tip, thereby causing the opening thereof.

The conclusion is that leaving the tip free from contact with any surface during the application of the compression force is key to allow for the opening of the tip, at the expense of an opening in any other area that is not the tip.

However, the high opening efficiency in lateral compression of the moist shell has the following drawbacks that are detrimental to the mechanisation and automation of the system:
- it requires pistachio moistening that is intense, due to the soaking time, soaking temperature, and/or vacuum impregnation thereof, as well as the extraction of indoor air, with the associated drawbacks of water consumption and the need for the subsequent disposal thereof, hygienic risks, the deterioration of the quality of the pistachio due to possible staining of the shell, and/or dilution of the flavour, and
- it requires the placement of the pistachio in two different dimensions: along the longitudinal axis parallel to the compression surfaces and also along the plane of the suture, in a direction perpendicular to the compression surfaces.

A third way of opening pistachios is by means of axial compression, leaving the tip free and the base in contact with the compression means.

The compression system used in this method is made up of an element with a hollow cylindrical configuration and a diameter less than the largest diameter of the pistachio, open at the ends to accommodate the tip of the pistachio and a rod at the other end that generates the impact on the base of the pistachio.

The result is a very low tip-opening efficiency. This system leads to a high percentage of broken shells, with cracks appearing off the suture. The pistachios that open do so mostly through a lateral notch, a small slit in the suture in the medial or basal lateral area.

As a drawback, it should be noted that the pistachio must be oriented in two directions: along the longitudinal axis of the pistachio, parallel to the axis of the compression system, and according to the tip, in the direction of the cylindrical piece.

A fourth way of opening pistachios is by means of axial compression, leaving the tip and the base free from the compression means.

The device used consists of two hollow cylindrical elements with a diameter smaller than the largest diameter of the pistachio, wherein the tip and the base of the pistachio are respectively housed.

The result is that the opening efficiency of the tip is low, although somewhat higher than the third way.

If the shell is moistened to a level of 30-40%, the result is a low opening efficiency, less than in the case of using a dry pistachio, due to the fact that they open more easily from the side than from the tip. The breakage decreases with respect to compressing the dry pistachio although, due to the flexibility of the shell, the amount of unopened pistachios increases.

A fifth way of opening pistachios is also by means of axial compression, leaving the tip and the base free from the compression means but wherein, unlike the previous way, the device used comprises a hollow cylindrical configuration element for the area of the tip and another with a hollow conical configuration for the base area.

As a result, the opening efficiency of the tip is significantly improved with respect to the aforementioned fourth way.

As a drawback, the pistachio must be oriented in two different directions: along the longitudinal axis of the pistachio, parallel to the axis of the compression system, and according to the tip, in the direction of the cylindrical piece.

A sixth way of opening pistachios is by means of axial compression, leaving the tip and the base free from the compression means, as in the previous way, but wherein the pistachio is housed upside down, with the tip in the conical element and the base in the cylindrical element.

As a result, the opening efficiency of the tip is significantly improved with respect to the aforementioned two opening ways and the percentage of broken shells is remarkably reduced.

The drawback is the same as the one mentioned in the previous way, in that the pistachio must be oriented in two directions.

A seventh way of opening pistachios is by means of axial compression, leaving the tip free and the base in contact with the compression means, the same as in the third way mentioned above, the difference being that the device used in this method is an element with a conical configuration, instead of cylindrical, hollow and open for the accommodation of the tip of the pistachio, also using a rod at the other end to impact the base of the pistachio.

The result is that the tip-opening efficiency is significantly improved with respect to the method used in the third way of opening.

The drawback is the same as this third way, in that you have to orient the pistachio in two directions: along the longitudinal axis of the pistachio, parallel to the axis of the compression system, and according to the tip, in the direction of the conical piece.

With regard to state-of-the-art documents, the most relevant ones in the sector known by the applicant are cited below.

Document WO2016068820A1 discloses a pistachio-opening system wherein the pistachios located in a silo are conveyed in spiral conveyors to cylinders where they are placed longitudinally in conical slots, one fixed and the other movable, which exerts pressure on the fixed one, making the pistachio break at the tip.

Document WO2016122428A1 discloses a pistachio-opening machine comprising a transfer mechanism that takes the pistachios from the feed line to a transfer apparatus that takes them to the opening device, a fixed casing and a movable casing placed in the main body of the machine, a fixing cylinder that adjusts the distance between the fixed casing and the movable casing according to the size of the pistachios, a pressure cylinder that pushes the movable casing towards the fixed casing, a pressure cylinder which breaks the pistachios, and the corresponding drives to activate the different mechanisms.

Document CN211794202 describes a pistachio shell-opening machine consisting of a machine base device, a feeding device and a shell-opening device. The base device of the machine comprises a machine frame, a feeding device mounting position and a shell opening device mounting position. The feeding device is fixed on the feeding device mounting position in a horizontal state. The shell-opening device is fixed in the mounting position of the shell opener in a vertical state. The machine has a high degree of automation and is capable of adapting to pistachios with different diameters.

Document ES2350427 relates to a process by which the partial opening of the shell that surrounds the seed of the pistachio is obtained. This process is noteworthy due to the novelty, simplicity and inexpensiveness thereof, consisting of subjecting the pistachio to a series of physical steps, none of them mechanical, so that there is no breakage of the fruit, which by varying the temperature and degree of moisture of the same, up to certain values, allows for a partial opening without the need to resort to sophisticated machines.

### DESCRIPTION OF THE INVENTION

In order to avoid the aforementioned drawbacks, the present invention describes a device and corresponding procedure thereof for opening pistachios which improves all of the of opening methods known in the state of the art and described in the background. To this end, additional opening ways are presented, continuing with the numbering used in the already known background.

An eighth way of opening pistachios is by means of axial compression, leaving the tip and the base free from contact with compression means. The configuration of the device is by means of hollow conical pieces both at the base and the tip. The result obtained with this way of opening is similar to that obtained using the second way with the moistened fruits, but with the advantage in that the pistachios do not have to be moistened and the suture does not have to be positioned in a specific way.

The result obtained is a highly efficient opening of the pistachio tip.

The drawback is that the pistachio must be oriented according to the longitudinal axis thereof with respect to the axis of the compression system.

Table 1 shows the results obtained in pistachio-opening tests using this eighth way, according to the present invention, and the opening ways known in the state of the art mentioned in the background.

**Table 1. Average percentage of each way of opening ± 95% confidence interval**

| SHAPE | Pistachio State | SUITABLE (%) | NOT SUITABLE (%) | | | | | |
|---|---|---|---|---|---|---|---|---|
| | | | BROKEN | Cracked base (1) | Lateral notch (2) | Open no tip = (1) + (2) | Loose seed | Closed |
| 1 | Dry | 5 ± 10 | 45 ± 7 | 0 | 40 ± 7 | 40 ± 7 | 10 ± 5 | 0 |
| 1 | Moist | 0 | 14 ± 13 | 0 | 83 ± 6 | 83 ± 6 | 0 | 4 ± 7 |
| 2 | Dry | 7 ± 7 | 67 ± 23 | 6 ± 8 | 0 | 6 ± 6 | 18 ± 11 | 2 ± 4 |
| 2 | Moist | 93 ± 5 | 3 ± 3 | 3 ± 3 | 0 | 4 ± 3 | 0 | 0 |
| 3 | Dry | 20 ± 8 | 20 ± 39 | 0 | 40 ± 3 | 40 ± 3 | 0 | 20 ± 39 |
| 4 | Dry | 28 ± 14 | 23 ± 22 | 0 | 7 ± 5 | 7 ± 5 | 0 | 31 ± 17 |
| 4 | Moist | 17 ± 6 | 0 | 0 | 30 ± 59 | 30 ± 59 | 0 | 53 ± 65 |
| 5 | Dry | 38 ± 12 | 13 ± 15 | 0 | 16 ± 8 | 16 ± 8 | 0 | 22 ± 11 |
| 6 | Dry | 64 ± 19 | 3 ± 3 | 0 | 1 ± 2 | 1 ± 2 | 0 | 32 ± 18 |
| 7 | Dry | 73 ± 7 | 5 ± 3 | 0 | 20 ± 9 | 20 ± 9 | 0 | 3 ± 7 |
| 8 | Dry | 85 ± 5 | 3 ± 2 | 3 ± 2 | 1 ± 1 | 4 ± 2 | 0 | 6 ± 5 |

A ninth way of opening pistachios consists of implementing an additional phase to the eighth way of opening, consisting of a heat treatment. With this additional heating phase, the width of the slit (separation at the tip) in pistachios is improved by 122%, and the length by approximately 18%.

A tenth way of opening pistachios consists of adding an additional phase to the eighth way of opening. This phase can be an alternative to the heat treatment step, can be avoided, or complementary, although prior to the heat treatment. The step consists of placing the pistachios inside a first hollow frustoconical device open at both ends and pushing them to pass through the hole of the smaller base.

In this way, the shell, already open at the tip, is subjected to a compression force that moves along the suture of the pistachio, from the end of the initial slit, created in the eighth way, to the tip of the suture located in the area with the largest diameter of the pistachio.

The result is that the width of the slit is increased by 477% and the length of the opening by 55%.

Table 2 represents the increase in the pistachio slit, in terms of the separation distance of the shell in the area of the tip and length, of the ninth and tenth ways of opening with respect to the eighth way.

**Table 2. Increase in width and length of the pistachio slit based on the different ways used**

| | Ninth way | Tenth alternative way | Tenth complementary way |
|---|---|---|---|
| Width | + 122 % | + 59 % | + 477 % |
| Length | +18 % | + 56 % | +100 % |

As a summary of this specification, the invention discloses a device for opening pistachios comprising a conical receptacle, intended to receive a pistachio nut at the tip, a rod, aligned with the conical receptacle, and an activator, intended to move the rod.

Pistachios have an elongated configuration and are defined by a tip, a base, and a suture connecting the base to the tip.

The device also comprises a first frustoconical receptacle, intended to house a pistachio, which has a smaller diameter of a dimension between 5% and 20% less than the largest transverse diameter of the pistachio.

The device also preferably comprises a second frustoconical receptacle wherein the conical receptacle and the first frustoconical receptacle are configured to be mechanically coupled to the second frustoconical receptacle in a removable way.

Furthermore, the rod can have a concave end which may also be conical and padded.

On the other hand, the invention also focuses on a procedure for opening pistachios with the described device. This procedure comprises the following steps:
a) housing a pistachio in the conical receptacle at the tip;
b) pressing the pistachio at the end of the base with the rod;
c) extracting the pistachio from the conical receptacle;
d) placing the pistachio in the first frustoconical receptacle;
e) pressing the pistachio with the rod until it goes through the first frustoconical receptacle.

The procedure can also have the following configuration:
- step a) is modified as follows:
   a1) coupling the smaller base of the second frustoconical receptacle to the base of the conical receptacle;
   a2) inserting a pistachio into the second frustoconical receptacle until it is housed in the conical receptacle;
- step c) is eliminated;
- step d) is modified as follows:
   d1) replacing the conical receptacle with the first frustoconical receptacle;
- comprising the additional phase of:
   f) uncoupling the first frustoconical receptacle from the second frustoconical receptacle;

The procedure may also comprise the following additional step:
g) submitting the pistachio to a heat treatment.

This heat treatment can consist of heating the pistachio to a temperature in a range from 40 to 165 degrees in a dry environment, meaning with a relative moisture of less than 80% for a period of time equal to or greater than 10 minutes, or at a temperature from 20 and 40 degrees in a moist environment, with a relative moisture equal to or greater than 80%, for a period of time of at least 5 minutes.

### DESCRIPTION OF THE DRAWINGS

For a better understanding of the present invention, figures are included, listed below.
Figures 1A, 1B and 1C represent pistachios with a slit in an acceptable condition.
Figures 2A, 2B and 2C represent pistachios with a slit in an unacceptable condition.
Figure 3 represents a view of a pistachio in a double conical receptacle system before and after a compressive force is applied to produce the slit in the tip, showing the points of contact between the device and the pistachio.
Figure 4 represents an alternative embodiment to the one shown in Figure 3 in which the conical receptacles have open ends.
Figure 5 represents a pistachio in the process of going through a first frustoconical receptacle, with the tip in contact with the smaller base, in the positions before, during and after exerting a compressive force on the pistachio.
Figure 6 represents several steps of the process of passing through a second frustoconical receptacle in which the process is carried out without moving the pistachio from its location.

A list of the references used in the figures is provided below to allow them to be more easily located:
1. Slit.
2. Tip.
3. Base or peduncular scar.
4. Suture.
5. Conical receptacle.
6. First frustoconical receptacle.
7. Second frustoconical receptacle.
8. Initial points of contact.
9. Final points of contact.
10. End of the initial slit.
11. Rod.

### PREFERRED EMBODIMENT OF THE INVENTION

The present invention describes a highly automatable device and procedure to artificially create a slit (1) in a closed pistachio from the tip (2) of the pistachio along the suture (4) of the shell so that the kernel/seed remains inside the shell and the shell remains unbroken. This process results in an appearance of a natural opening and slit (1) dimensions suitable for a fingernail to be inserted to open the pistachios, artificially split, without having to use a nutcracker.

The proposed solution to perform the opening consists of a series of steps as described below.

The first step consists of creating a slit (1) in the tip (2), or equivalently in the separation of the shell at the area of the tip (2). This step consists of applying an axial compressive force on the closed and dry pistachios.

The dryness in consideration is known as stabilisation moisture for storage, and can be around 7%, for example, according to the standard for unshelled pistachios, Codex Stan 131-1981.

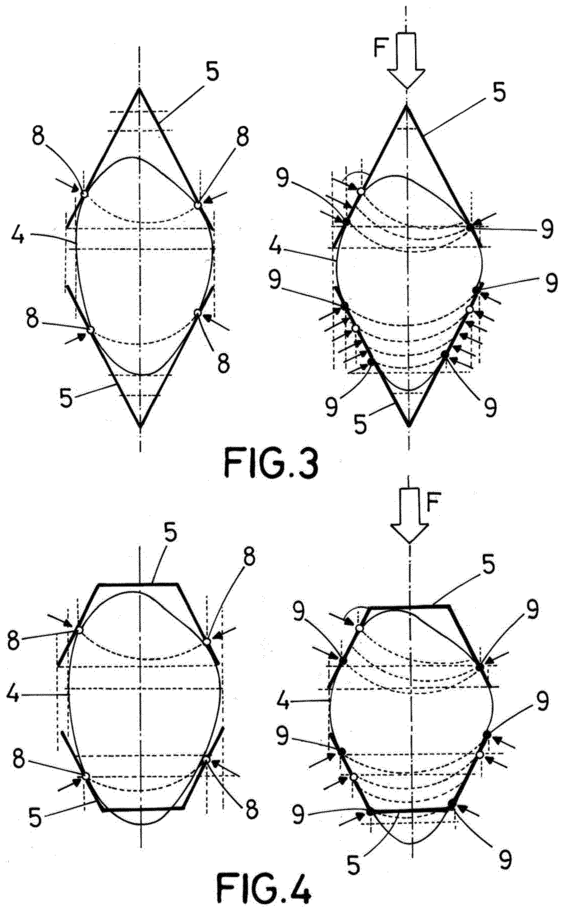

Thus, the pistachios are individually held by the internal surfaces of two conical receptacles (5), placed with the axes aligned and the bases thereof in opposition, as represented in Figure 3.

In addition, as shown in Figure 4, these conical receptacles (5) can have an open end because this may be more appropriate for specific processes, although they can never have a diameter that allows the pistachios to pass through the inside.

In this first step, the positioning of the closed pistachio in the double conical receptacle system (5) only requires that the longitudinal axis of the pistachio be positioned in line with the axis of the double cone system, as represented in Figures 3 and 4, the transversal positioning of the suture (4) of the pistachio being irrelevant, and furthermore it does not matter in which of the two conical receptacles (5) the tip (2) of the pistachio is housed, being either in the lower or in the upper receptacle.

With a system of conical receptacles (5) of this type, a single axial compressive force F is distributed/transmitted perpendicular to the suture (4) of the pistachio at the initial points of contact (8) of the pistachio with the tangential surface of the conical receptacles (5), as shown in Figures 3 and 4, making the opening of the pistachio more effective. The conical receptacles (5) will be in contact with the pistachio at the suture (4), since this is the area of the pistachio that transversally protrudes the most, and at the diametrically opposite area.

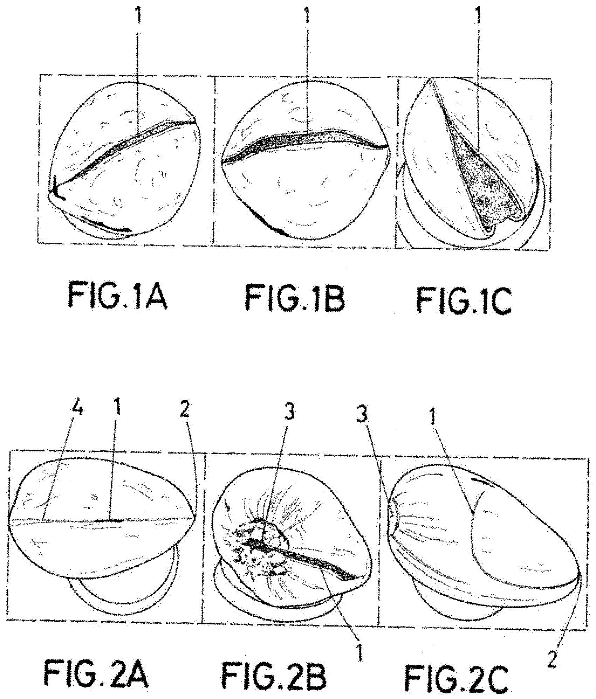

Figure 1 represents views of properly opened pistachios, with a slit (1) in the area of the tip (2) and with a reasonable length and width where a user's fingernail fits and is therefore considered acceptable. Figure 1A represents a pistachio with a slit (1) of a reasonable size, considered to be the minimum a user would expect of a slit (1) in a pistachio. Figure 1B is an improved slit (1) of the pistachio of Figure 1A. Figure 1C represents a pistachio with a very attractive slit (1) for a user, wherein the opening would be very comfortable.

Figure 2 represents pistachios obtained as a result of the use of alternative opening methods to that of the invention that cause inadequate breaks due to cracking of less resistant areas, such as the base (3) or peduncular scar, due to contact with potentially sharp edges that create a notch and/or crack at a right angle to the suture line towards the curved part of the shell, or very small slits (1) that do not allow a user to introduce their fingernails to open them. Logically, the creation of any slit (1) or crack in an inappropriate area releases tension in the shell, decreasing the resulting force exerted near the tip (2), thus preventing the efficiency of the opening thereof.

Figure 2 represents notches located in different pistachios that are considered invalid. In Figure 2A, the pistachio has a small slit (1) at the suture line (4). Figure 2B represents a slit (1) which, despite being produced by the base (3), cannot be considered valid, since it does not reach the tip (2) and provides an opening that will not be comfortable for the user, given that the shell will break without leaving a big enough opening for the pistachio to come out. Lastly, Figure 2C represents the pistachio with a crack perpendicular to the suture line, which is equivalent to being closed, since it cannot be opened using one's fingernails.

In the system of opposite conical receptacles (5) of the present invention, the ends of the pistachio, both the tip (2) and the base (3), are free from any contact with a surface and/or edge perpendicular to the longitudinal axis of the pistachio, which has a doubly positive effect on the opening efficiency of the tip (2), due to the effectiveness of the result of the force at the tip (2), by leaving the end thereof free and by avoiding cracks at the base (3) that release tension in the area of the tip (2).

Figures 3 and 4 show the position of the pistachio once inserted into the conical receptacles (5) and after the compressive force is exerted, showing the initial points of contact (8) of the surface of the conical receptacles (5) with the suture line (4) of the pistachio moments before the compressive force F is exerted and the final points of contact (9), representing the ends of the new contact areas of the surface of the conical receptacles (5) with the suture (4) once compression has started.

It should be noted that the first frustoconical receptacles (6) are configured so that the pistachios go through the same, as will be discussed later.

The system of forces generated in this solution results in an opening percentage of up to 85% of the closed pistachios.

A second step consists of intensifying the slit (1) or increasing the separation distance of the shell, either longitudinally or transversely. This step can be developed in two totally different versions.

The first version consists of subjecting the pistachios with the tip (2) already split in the first step to a heat treatment that does not decrease the organoleptic quality of the pistachio, the pistachios able to come in bulk or in batches. In this first version of the second step, the shell separation distance in the tip area can be increased after the opening of the tip (2) in the first step up to an additional 122%.

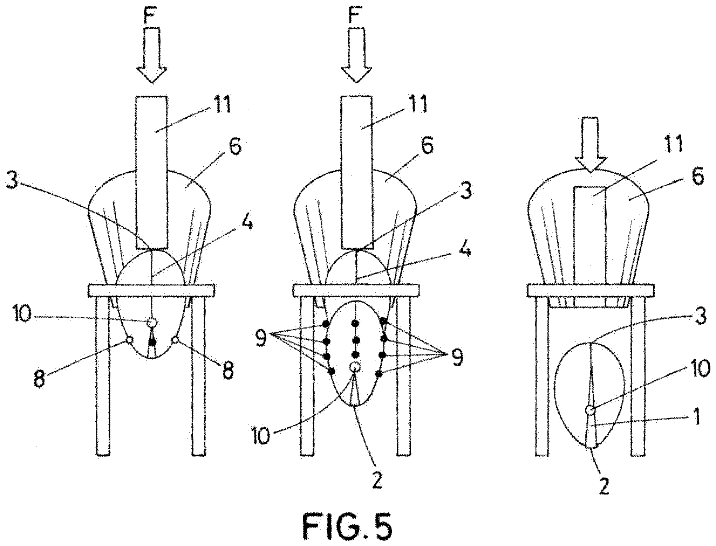

The second version of the second step is represented in Figure 5 and can be alternative or complementary to the first version, wherein a pistachio is represented in the process of passing through a first frustoconical receptacle (6) in the positions before, during and after exerting the compressive force F.

In this version of the second step, the slit (1) is further increased after the first step if, after tip separation (2) or compression in the double conical receptacle system (5), the pistachios are removed from the double conical receptacle (5), repositioned according to the longitudinal axis thereof and individually, by means of pressure in the direction of movement from the tip (2) to the base (3) or peduncular scar, sent through a first frustoconical receptacle (6), the smaller base of which has a diameter of such dimensions that the shell already open at the tip (2) thereof is subjected to a compressive force that moves along the suture (4) of the pistachio, from the end of the initial slit (10) to the point of the suture (4) located in the area with the largest diameter of the pistachio, increasing the length of the slit (1) in this step.

Tests performed have shown that an optimal configuration of the first frustoconical receptacle (6) is achieved with a smaller base diameter with a dimension of 5% to 20% less than the maximum diameter of the pistachio measured transversely. Preferably, this diameter is 10-15%.

As indicated, this step can be an alternative to the heat treatment used in the first version, or complementary, such that the heat treatment is carried out after this step. When it is complementary, the length and width of the final slit (1) are further increased, which makes the pistachios more attractive to the consumer, due to their appearance and to the ease of opening them by hand.

By applying this aspect of the invention, none of the pistachios that pass through the hole in the smaller base of the first frustoconical receptacle (6) experiences shell breakage at any place other than the tip, nor do they experience shell and seed separation, the dimensions of the slit (1) being increased, both in length, up to an additional 100%, and in width, up to an additional 477%.

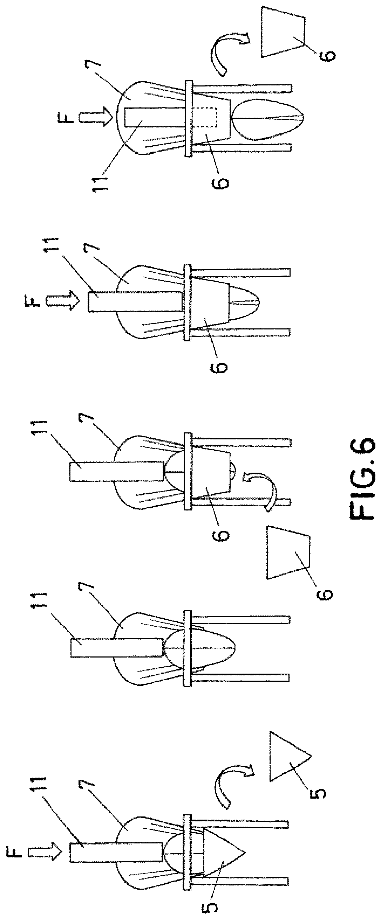

According to another aspect of the present invention, the succession of steps from the opening of the tip (2) by compression in the double conical receptacle system (5) to the constricted passage through the first frustoconical receptacle (6), instead of taking place at separate locations, can be carried out at the same location, as shown in Figure 6. This eliminates the need to remove/unload the pistachio from the double conical receptacle system (5) and reintroduce and reorient it in the advance direction from the tip (2) to the base (3) in the system when passing through the first frustoconical receptacle (6).

In this new embodiment, a second frustoconical receptacle (7) is used, in which a set of conical receptacles (5) and first frustoconical receptacles (6) are successively and alternately coupled, carrying out the steps of opening the tip (2) and intensifying the opening of the tip (2) of the pistachio without having to remove the pistachio from the conical receptacle (5) and insert it into the first frustoconical receptacle (6), with the corresponding reorientation of the pistachio according to the axis thereof and with the tip downwards. Rather, it is only necessary to place the first the conical receptacle (5) after the smaller diameter of the second frustoconical receptacle (7) and, once the compressive force intended to create the slit (1) has been exerted on the pistachio, extract the conical receptacle (5) to place the first frustoconical receptacle (6) in the same position, so that the pistachio goes through the same.

To fix the conical receptacle (5) and the first frustoconical receptacle (6) to the second frustoconical receptacle (7), a fixing device of the ones known in the state of the art can be used.

This technique provides advantages not only of a mechanical nature but also in terms of processing times. It clearly differs from the state of the art and, although it results in a slightly lower opening percentage than the option in different locations, being reduced to 80% of closed pistachios, whereas in the other case the figure was up to 85%, it has a shell breakage percentage of less than 5% and no kernel/seed outside the shell thereof.

The designed solution is capable of being integrated into an automated system for the linear opening of pistachios.

The assembly of parts and the opening method have a high degree of automation, a highly efficient structure with few breaks and a positive effect that is applicable to dried pistachios.

## Claims

1. A device for opening pistachios with an elongated configuration comprising a tip (2) and a base (3) joined by a suture (4), comprising:
- a conical receptacle (5), intended to receive a pistachio at the tip (2),
- a rod (11), aligned with the conical receptacle (5), and
- an activator, intended to move the rod (11),
**characterised in that** it comprises a first frustoconical receptacle (6), intended to house a pistachio, wherein the smaller diameter of the first frustoconical receptacle (6) is between 5% and 20% smaller than the largest transverse diameter of the pistachio.

2. The device for opening pistachios of claim 1, comprising a second frustoconical receptacle (7) wherein:
- the conical receptacle (5) and the first frustoconical receptacle (6) are configured to be mechanically coupled to the second frustoconical receptacle (7) in a removable way.

3. The device for opening pistachios of claim 1 or 2, wherein the rod has a concave end.

4. The device for opening pistachios of claim 3, wherein the concave end is padded.

5. The device for opening pistachios of claim 3, wherein the concave end has a conical configuration.

6. A procedure for opening pistachios with the device of claim 2, comprising the following steps:
a) housing a pistachio in the conical receptacle (5) at the tip (2);
b) pressing the pistachio with the rod (11) at the end of the base (3);
**characterised in that** it comprises the following additional steps:
c) extracting the pistachio from the conical receptacle (5);
d) placing the pistachio in the first frustoconical receptacle (6),
e) pressing the pistachio with the rod (11) until it goes through the first frustoconical receptacle (6).

7. The procedure of claim 6, wherein:
- step a) is modified as follows:
a1) coupling the smaller base of the second frustoconical receptacle (7) to the base of the conical receptacle (5);
a2) inserting a pistachio into the second frustoconical receptacle (7) until it is housed in the conical receptacle (5);
- step c) is eliminated;
- step d) is modified as follows:
d1) replacing the conical receptacle (5) with the first frustoconical receptacle (6);
- comprising the additional phase of:
f) uncoupling the first frustoconical receptacle (6) from the second frustoconical receptacle (7);

8. The procedure of claims 6 or 7, comprising the following additional step:
g) submitting the pistachio to a heat treatment.

9. The procedure of claim 8, wherein the heat treatment consists of heating the pistachio to a temperature between 40 and 165 degrees, with a relative moisture of less than 80%, for a period of time of less than 10 minutes.

10. The procedure of claim 8, wherein the heat treatment consists of heating the pistachio to a temperature between 20 and 40 degrees, with a relative moisture of greater than 80%, for a period of time greater than 5 minutes.
